# EUROPEAN PATENT APPLICATION

(11) **EP 2 068 221 A1**
(43) Date of publication of application: **10.06.2009**
(21) Application number: 07122251.7
(22) Date of filing: 04.12.2007
(51) Int. Cl.: G05D 7/06

(54) **Flow-sensing device**

(71) Applicant: Succes A/S, 2730 Herlev (DK)
(72) Inventor: Andersen, Peter Malle, 4470 Svebølle (DK)
(74) Representative: Holme Patent A/S

(57) **Abstract**

The present invention relates to a device for the detection of water flow in domestic and/or industrial water conduits and pipes. The invention further relates to the use of such a device within a water leakage detection-, alarm- and shut-off-system.

## Description

The present invention relates to a device for the detection of water flow in domestic and/or industrial water conduits and pipes. The invention further relates to the use of such a device within a water leakage detection-, alarm- and shut-off-system.

Domestic water leaks pose a severe challenge that arguably exists on a global scale. One of the large contributors to domestic water leaks are bursts of water pipes or PVC lines which may be caused by corrosion, freezing, or rodents. These leakages may do major damage to furniture, interior decoration, or electrical installations. This not only implicates financial loss, but also poses safety hazards by possible short-circuiting of electrical equipment. In its aftermath, water leakage may include long-term effects such as structural damage to the house, or mould growth within the living space or in cellars. The latter often results in unacceptable health risks necessitating extensive decontamination and restoration measures.

Long-term sneaky water leakage may be caused by running toilets, leaky faucets, defective washing machines, air-conditioners, water-heaters or evaporative coolers, minor water-pipe leaks in the subsurface, or defective gardening equipment such as sprinklers or garden hoses. This type of water leakage may go undetected or unappreciated over weeks or months, often leading to excessive water bills at the very least. Small, seemingly insignificant water leaks may sum up into thousands of liters in a few months or a year.

In many arid or semi-arid regions around the world clean drinking water is a scarce commodity. In this context, undetected water leakage may not only cause problems to affected individuals, but certainly constitutes a societal concern in a broader perspective.

In summary, domestic water leakage may result in financial damage, irreparable loss of personal objects, safety hazards, domestic health concerns, and wasting of an important and frequently scarce resource. There is consequently a definitive need for a reliable detection of domestic water leakage, preferably at the earliest possible stage.

Many of the currently available water alarm systems are based on a stand-alone battery-operated moisture detector that may be placed on a floor or affixed to a wall. An acoustic and/or visual alarm is triggered by accumulation of moisture, e.g. by a wet carpet or other types of moist flooring. The obvious disadvantage to this approach is that it requires installation of the detector in every room where water damage is possible or expected. Also, a given degree of wetting or moisture is required before the alarm is set off, implicating that the alarm possibly is raised too late. In addition, this type of system obviously does not shut off water flow.

Furthermore, many known safety systems are targeted towards individual appliances, e.g. washing machines. These devices are usually installed directly on the individual appliance, having the capability of shutting off the water supply. Commonly, these devices comprise electrically operated valves that open only when the appliance draws a current. Examples of this are U.S. Pat. No. 6612323 to Horne and U.S. Pat. No. 6003536 to Polverari. Again, the disadvantage here is that every appliance of interest needs to be equipped with a separate safety system. Also the latter embodiment is only useful for electronical devices.

Moreover, different whole-house systems are available in which the main water supply piping of a house is equipped with a valve, which may shut off the water supply in the event of a leak. Some whole-house system are based on an array of several moisture sensors distributed around the house, e.g. at the base of different appliances. These may communicate with a central shut-off valve by means of wiring- or wireless-connection (e.g. radio signals). Together with the above-discussed disadvantages of moisture sensors, the complexity of this set-up makes the system costly and susceptible to failure.

Other units use the water flow rate as parameter for detecting pipe bursts. Yet other devices use mechanical means, e.g. water-turbines, to monitor the volume or the flow rate of water. In these systems the water flow may be interrupted if a certain threshold volume or threshold rate is exceeded. Here, accurate determination of the water flow rate and/or the passed water volume is imperative.

The detection of water flow in pipes may be achieved by using pulse-generating flow meters based on the piezoelectric effect (e.g. U.S. Pat. No. 4868566 to Strobel et al.). Devices like these may be integrated into a water flow control system such as disclosed by U.S. Pat. No. 6708722 to Goodenough. Here, a solenoid actuated valve communicating with a pulse-generating device via a timer controls the water flow. Complex solutions like these tend to be costly and require considerable maintenance.

Another drawback of most known water meters or signal generating flow detection devices is that their ability to handle peak flow rates, i.e. flow rates corresponding to maximum water consumption, often compromises their sensitivity towards low flow rates. This is especially the case for long-term application.

Thus, it is a first aspect of the present invention to provide a simple and inexpensive flow-sensing device that may be included into a water leakage alarm system.

It is a second aspect of the present invention to provide a flow sensing device that may be installed in a standard water supply line such as found in residential or business buildings.

It is a third aspect of the present invention to provide a flow sensing device whose functionality is independent of the accurate determination of water flow rates or water volume.

It is a fourth aspect of the present invention to provide a flow-sensing device with an improved sensitivity towards low and hardly detectable flow rates.

It is a fifth aspect of the present invention to provide a flow sensing device whose sensitivity is not compromised by high flow rates such as peak flow.

It is a sixth aspect of the present invention to provide a flow sensing device which through simple modifications may be adjusted to varying requirements as to sensitivity, flow rates or water pressures.

The new and unique way in which the current invention fulfils the above-mentioned aspects is the combination of a flow-detecting and signal-generating unit with a a flow regulator in a flow-sensing device. The flow regulator is installed upstream of the flow-detecting and signal-generating unit, and comprises means for varying the ratio of (i) fluid flowing through to (ii) fluid bypassing the flow-detecting and signal-generating unit.

The flow regulator takes the load of the flow-detecting and signal-generating unit at high flow rates, e.g. at times of maximum water consumption by creating a bypass around the signal-generating unit. This combination allows the very sensitive flow-detecting and signal-generating unit, which may be based on a water wheel, to be used over a wide range of flow rates, water pressures, and pipe diameters.

The flow-sensing device of the present invention may therefore be advantageously used in a wide range of domestic and business surroundings such as houses, apartments, garden areas, garages, office buildings, or industrial facilities.

During normal water consumption that may occur during showering, washing, or any other water-consuming process a substantial fraction of the water flowing through the flow-sensing device of the current invention may flow through the bypass, but not through the flow-detecting and signal-generating unit. This redundantizes any technical efforts targeted towards flow rate calibration or optimization of the operational range of the water-wheel-based unit.

One of the major advantages of the present invention is therefore the fact that the flow detecting and signal-generating unit is based on a simple and cost-effective principle, the combination of mechanical motion of a water wheel with basic photoelectric transmission and reception. The device of the present invention may therefore be easily and cost-efficiently produced and maintained.

In a preferred embodiment of the present invention the flow-sensing device is installed downstream of a public or private water provider's water meter.

In another embodiment, the flow sensing device of the present invention communicates with a shut-off valve that will typically be installed downstream of the flow sensing device. The communication with the valve is advantageously realized via a timer, which is able to register the flow time of water passing through the flow-sensing device. The shut-off valve may be a ball valve, a solenoid valve, a poppet valve, a hydraulic or pneumatic valve, or any other type of mechanical or electrical actuated valve.

A particularly expedient embodiment of this arrangement is so designed that the flow-sensing device of the present invention is an essential element within an automatic whole-house water leak detection and shut-off system.

In another embodiment, the housing and the caps of the flow sensing device are made of stainless steel, preferably but not limited to stainless steel of the grade 316.

Advantageously, the effect of the water bypass may be adjusted to site-specific conditions such as water flow rate and water pressure by modifying the flow-regulating unit according to the present invention. Typically, this modification will include drilling one or more holes into the side surface of the hollow cylinder of the flow-regulating unit.

Another embodiment envisages using the flow-sensing device of the present invention to determine the flow direction of the water. The flow detecting and signal-generating unit may be able to detect and to transmit whether the water wheel rotates clockwise or counter-clockwise around its axis.

In principle, the flow sensor according to the present invention may be used in combination with liquids other than water. In one embodiment of the present invention the flow-sensing device could be used for the detection of leaks in lines or pipes carrying hydrocarbons. These hydrocarbons may for example be petroleum, gasoline, diesel, or oil.

The invention will be explained in greater detail below where further advantageous properties and example embodiments are described with reference to the examples and drawings.

### Figures

Fig. 1 shows a 3-dimensional exploded view of the flow-sensing device according to the present invention.

Fig. 2 shows a 3-dimensional view of the flow-sensing device where the parts are drawn in the assembled condition.

Fig. 3 shows a longitudinal section of the flow-sensing device in a first condition.

Fig. 4 shows a longitudinal section of the flow-sensing device in a second condition.

Fig. 5 is a sectional view of the flow-detecting and signal-generating unit, which is rotated around its vertical axis by 90 degrees as compared to Fig. 3 and 4.

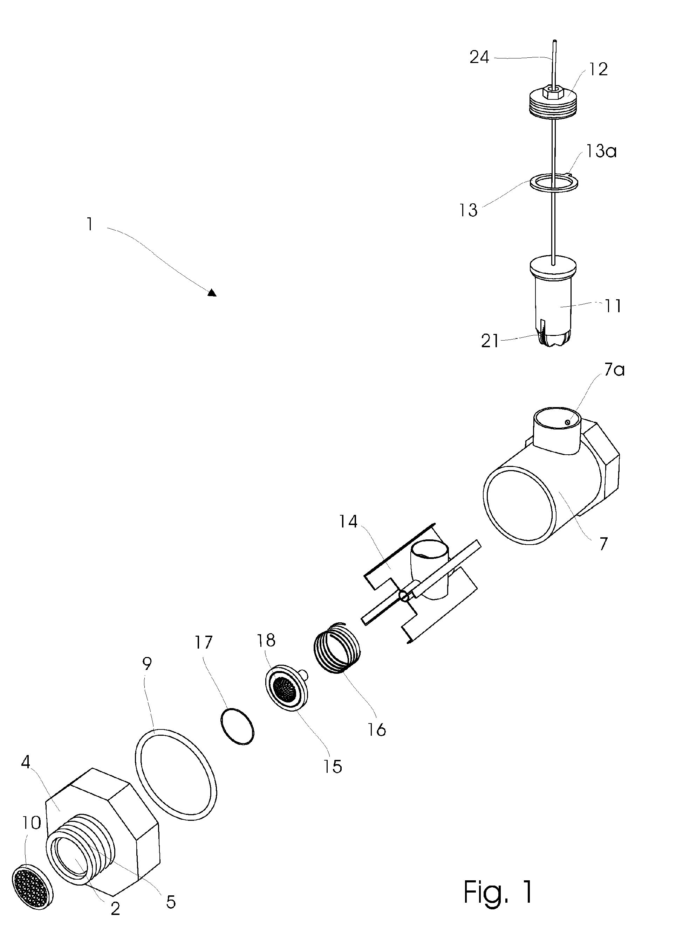

In the embodiment of the present invention shown in Fig. 1 the flow-sensing device 1 has an inlet 2 where water from a water supply line flows into the device, and an outlet 3 (not shown in Fig. 1) where water leaves the device. At the inlet 2, the device features a first cap 4 with a first male thread 5 that is used to install the device to the water supply line, and a first female thread (not shown in Fig. 1) that is used to screw the first cap 4 onto the cylindrical housing 7. At the outlet 3 the housing 7 features a second male thread (not shown in Fig. 1) that is used to install the device to the water supply line. Both the first cap 4 and the housing 7 are preferably made of stainless steel.

A watertight, internal first sealing ring 9, preferably made of rubber or another polymer, is placed between the housing 7 and the first cap 4 preventing escape of water and ensuring a firm connection. A first sieve 10 is fitted into the opening on the inlet 2 of the first cap 4. The first sieve 10 extends over the entire cross section of the opening. The function of the first sieve 10 is to remove debris and large particles from the water stream, preventing possible interference with downstream elements of the device.

The housing 7 has a third opening at the top where a flow-detecting and signal-generating unit 11 may be inserted into the housing 7. A second cap 12 may be screwed onto the third opening, preferably such that the second cap 12 has a male thread and the opening has a female thread. A washer 13 may be placed between the second cap 12 and the flow-detecting and signal-generating unit 11. The washer may feature a nose 13a that fits into a corresponding hole 7a in the housing 7, for correct placement.

Inside the housing 7 is located a support frame 14. The function of the support frame 14, which is preferably made of a synthetic polymer, is to house the flow detecting and signal generating unit 11 and a flow regulator 15 together with a spring 16. The support frame 14 is constructed in such a way that it permits free water flow through the proportion of the cross section of the cylindrical cavity within the housing 7 that is not occupied by the support frame 14 itself.

The flow regulator 15 comprises a hollow cylinder whose base area gradually decreases towards its end that lies closer to the outlet 3. The flow regulator 15 is spring-biased against the inner opening of the first cap 4, implying that at no-flow conditions the flow regulator 15 is tightly pressed against the inner wall of the first cap 4. This effectively seals the opening against water bypassing but not flowing through the flow regulator 15. To ensure an effective sealing the flow regulator 15 is equipped with a watertight second sealing ring 17 which constitutes the physical connection between the first cap 4 and the flow regulator 15 at no-flow conditions.

The flow regulator 15 may optionally be equipped with a second sieve 18 as another precaution against particles or debris carried by the water. The second sieve 18, which extends over the entire cross section of the inlet of the flow regulator 15, may be convex, bulging outward towards the inlet 2 of the flow-sensing device 1.

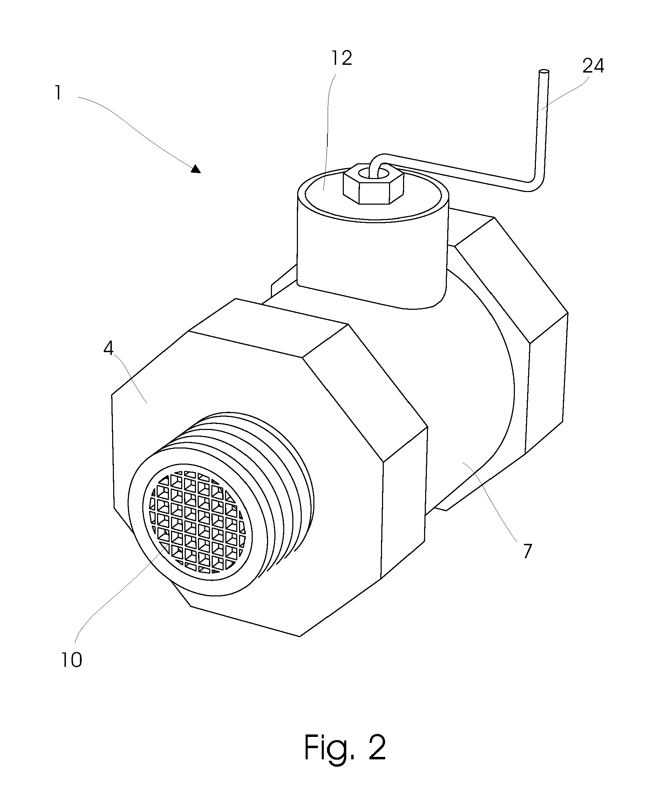

The assembled flow-sensing device is shown in Fig. 2.

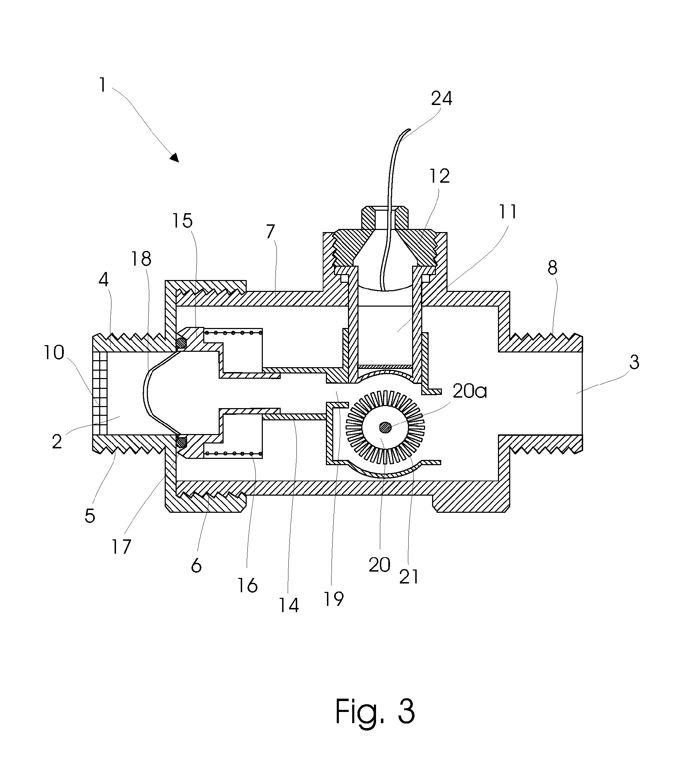

At low rates of water flow the flow regulator 15 will remain in a first position where it is pressed against the inner wall of the first cap 4 due to the force exerted by the spring 16. This is shown in the sectional view of Fig. 3. In this situation, water flows through the center of the flow regulator 15 and through an orifice 19 towards a water wheel 20 that features one or more blades 21. The kinetic energy of the flowing water is transferred to the water wheel 20, which thereupon rotates around its axis 20a. Fig. 3 furthermore shows the first female thread 6 of the first cap 4, and the second male thread 8 of the housing 7.

In the said first position of the flow regulator 15 a considerable fraction of the internal cavity within the housing 7 does not contribute to water flow. Water flow is confined to the narrow cavity within the flow regulator 15, the support frame 14 and the orifice 19. At constant water flow rate the flow velocity increases with decreasing flow area, that is, with a decreasing cross sectional area that is available for water flow. Consequently, the decrease in flow area brought about by the flow regulator 15 leads to increased flow velocities where the water encounters the flow-detecting and signal-generating unit 11, which in turn leads to an increased sensitivity of the latter.

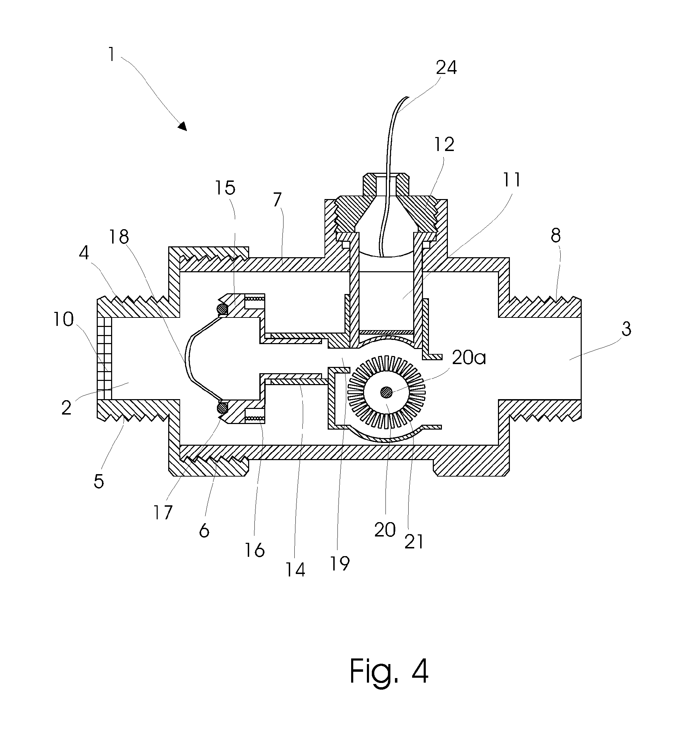

At high flow rates, such as at peak flow conditions, the pressure difference between inlet 2 and outlet 3 will increase. As shown in Fig. 4, The pressure of the incoming water will consequently be able to displace the flow regulator 15 from its first to its second position against the force of the spring 16 and towards the outlet 3. This will remove the sealing effect of the flow regulator 15 towards the inner wall of the first cap 4. A considerable amount of water is then able to flow around the outer boundary of the flow regulator 15, thus reaching the outlet 3 without having encountered the flow-detecting and signal-generating unit 11.

An optional feature of the flow regulator 15 is one or more holes penetrating the side surface of the cylinder (not shown). By means of these holes flowing water may circumvent the flow detecting and signal-generating unit 11 even if the flow regulator is tightly pressed against inner wall of the first cap 4. This feature may be advantageously used to vary the pressure requirement for displacing the flow regulator from its first to its second position.

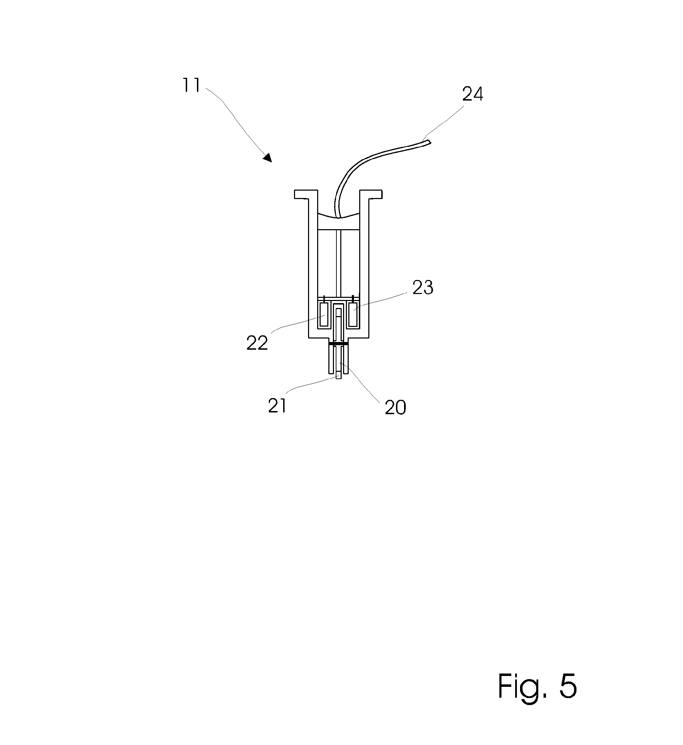

Figure 5 shows a sectional view of the flow-detecting and signal generating unit 11 perpendicular to the main direction of water flow through the unit. Apart from the water wheel 20 the flow-detecting and signal-generating unit 11 features a transmitter 22 and a receiver 23, which are communicatively connected with each other. As used herein, the term "communicatively connected" means that the receiver 23 is capable of receiving signals from the transmitter 22.

The transmitter 22 may transmit a constant signal such as electromagnetic radiation. The preferred type of electromagnetic radiation will be visible light. Accordingly, the transmitter 22 may be a light-emitting diode (LED). Other conceivable embodiments include using ultraviolet radiation or infrared radiation as the signal according to the present invention. In yet another embodiment the transmitter 22 may comprise a laser. The signal reception at the receiver 23 may be based on the photoelectric effect.

At no-flow conditions, the water wheel 20 will be motionless resulting in a constant signal reception by the receiver 23. As used herein, a constant signal reception may either be a constant detectable signal or a constant lack of signal reception. As used in this context, the term "constant" may refer to a pre-determined time limit that may be on the order of a few seconds. In contrast, the water wheel 20 will rotate when flowing water encounters the flow-detecting and signal-generating unit 11. This will result in the blades 21 passing through the signal transmission path between transmitter 22 and receiver 23. This gives rise to a discontinuous signal reception by the receiver 23, since the signal is alternately blocked by a blade 21 and allowed to reach the receiver when no blade 21 obstructs the signal transmission path between the transmitter 22 and the receiver 23.

Both transmitter 22 and receiver 23 are within the flow-detecting and signal-generating unit 11 operably connected to an electronic assembly (not shown), that is appropriate for conveying the energy necessary for signal-production by the transmitter 22, and that is appropriate for registering and transferring the signal to an electronic device outside the flow detecting and signal generating unit 11. The latter may be achieved by means of a cable 24. The electronic assembly is capable of distinguishing between a continuous and a discontinuous signal reception, where a continuous signal reception may also mean no signal reception.

The sensitivity of the flow detecting and signal-generating unit 11 may easily be adjusted by varying the amount of blades 21 of the water wheel 20. More blades 21 will more rapidly change the signal from continuous to discontinuous than less blades. In a preferred embodiment of the present invention the water wheel 20 has between 20 and 50 blades.

A skilled person in the art will understand that the physical connections within the device, especially the screw couplings, may be amended by including further sealing rings and/or washers.

### Examples

### Example 1: Integration of the flow sensing device into an automatic whole-house water leak detection and shut-off system

A flow-sensing device according to the present invention is installed to the main water supply line of a domestic house. Installation takes place about 10 centimeters downstream of the main water meter that is owned by the public water supplier.

The flow-sensing device is operably connected to a direct current 12 V motorized ball valve. Both the flow sensing device and the ball valve are connected to a timer that is activated upon the onset of water flow, that is, upon the onset of a discontinuous signal reception. The timer is programmed in such a way that it closes the valve after 30 minutes of discontinuous signal reception.

If discontinuous signal reception proceeds for less than 30 minutes the timer is automatically reset to its initial stage, for instance by using a second timer.

The temporal threshold for distinguishing between continuous and discontinuous signal reception may be set to five seconds, that is, if within a five second interval no change in signal reception is registered the signal is interpreted as being continuous.

The flow-sensing device is furthermore connected to an electronic assembly capable of producing acoustic and visual signals. At no-flow conditions, three light emitting diodes blink in succession with a constant frequency. Upon the onset of discontinuous signal reception, i.e. the onset of water flow, the frequency of said visual signal increases. Alternatively, different colors may be used to indicate a change from no-flow to flow conditions. After 30 consecutive minutes of discontinuous signal reception the electronic assembly produces an acoustic signal in the form of a continuous beeping sound that stops after 10 seconds.

A user interface comprising the above-mentioned acoustic and visual features is used to program the said automatic whole-house water leak detection and shut-off system. Several of these interfaces are placed at different strategical locations within the house. Wireless communication between the interfaces allows for visual or acoustic signal perception even locations that are remote from the actual flow sensing device and the shut-off valve.

The user interface will also allow the user to automatically close the valve when leaving the building for a longer time period. Furthermore, the interface will allow the user to program the device according to the present invention such that it closes the valve at initial water flow, that is, at the upon the first registration of a discontinuous signal reception.

## Claims

1. A flow-sensing device comprising a flow-detecting and signal-generating unit (11), **characterized in that** the flow-sensing device (1) comprises a flow regulator (15) installed upstream of the flow-detecting and signal-generating unit (11), wherein the flow regulator (15) comprises means for varying the ratio of (i) fluid flowing through to (ii) fluid bypassing the flow-detecting and signal-generating unit (11).

2. A flow-sensing device according to claim 1, **characterized in that** the flow-detecting and signal-generating unit (11) comprises
- at least one rotatable water wheel (20) with one or more blades (21),
- at least one transmitter (22) and at least one receiver (23) which are communicatively connected with each other, and
- an electronic assembly capable of distinguishing between a continuous and a discontinuous signal reception by the receiver (23).

3. A flow-sensing device according to claim 2, **characterized in that** the rotatable water wheel (20) comprises between 20 and 50 blades.

4. A flow-sensing device according to claims 2 or 3, **characterized in that** the transmitter (22) transmits electromagnetic radiation.

5. A flow-sensing device according to any one of claims 2-4, **characterized in that** the transmitter (22) comprises a light-emitting diode (LED).

6. A flow-sensing device according to any one of claims 1-5, **characterized in that** the flow-regulating means comprise a hollow cylinder, which is spring-biased against the direction of fluid flow.

7. A flow-sensing device according to claim 6, **characterized in that** the hollow cylinder comprises one or more holes penetrating its side surface.

8. The use of the flow-sensing device according to any one of claims 1-7 in an automatic leak detection and shut-off system.

9. An automatic leak detection and shut-off system comprising
- a flow-sensing device according to any one of claims 1-7,
- one or more shut-off valves that are operably connected to the flow-sensing device,
- one or more timers that are operably connected to the flow-sensing device and the shut-off valves,
- one or more user interfaces that are operably connected to the flow-sensing device, the shut-off valves and the timers, and that comprise acoustic and/or visual signaling means, wherein the user interfaces allow programming of the automatic leak detection and shut-off system.

10. The automatic leak detection and shut-off system according to claim 9, wherein at least one timer automatically effects closing of the shut-off valve if a predefined time limit for continuous water flow has lapsed.

11. The automatic leak detection and shut-off system according to claim 9 or 10, wherein at least one timer is automatically reset to its initial stage when flow ceases prior to a predefined time limit.

12. The automatic leak detection and shut-off system according to any one of claims 9-11, wherein the shut-off valve is a motorized ball valve.

13. The automatic leak detection and shut-off system according to any one of claims 9-12, wherein the operable connections between the user interfaces and the other said components are achieved through wireless connections.

14. The use of the automatic leak detection and shut-off system according to any one of claims 9-13 for monitoring water conduits in public or private buildings.

15. The use of the automatic leak detection and shut-off system according to any one of claims 9-13 for monitoring water conduits associated with outdoor leisure and/or garden facilities.
